Europäisches Patentamt

European Patent Office

Office européen des brevets

(19)

(11) Publication number: **0 122 900**

**A2**

(12) **EUROPEAN PATENT APPLICATION**

(21) Application number: **84850116.9**

(22) Date of filing: **10.04.84**

(51) Int. Cl.³: **F 25 D 31/00**
**A 01 J 9/04**

(30) Priority: **18.04.83 SE 8302164**

(43) Date of publication of application:
**24.10.84 Bulletin 84/43**

(84) Designated Contracting States:
**DE FR GB LU NL**

(71) Applicant: **Wedholms AB**
**Box 1001**
**S-611 29 Nyköping(SE)**

(72) Inventor: **Carlsson, Stefan**
**Bramdlörrsvägen 160**
**S-611 65 Nyköping(SE)**

(74) Representative: **Sedvall, Bengt et al,**
**AWAPATENT AB Box 7402**
**S-103 91 Stockholm(SE)**

(54) Apparatus for refrigeration and storage of products.

(57) Apparatus for refrigeration and storage of products, especially liquid food products, such as milk, in an insulated tank (10). In the bottom of the tank there is disposed an evaporator (12) constituting part of a cooling coil in which a refrigerant circulates for keeping the tank contents cold. The product is supplied to the tank batchwise during certain time periods and the tank is adapted to hold several such batches of the product. To obtain a maximum average temperature of the product and the refrigerant for cooling with a minimum of energy consumption there is connected to the tank an insulated container (24) adapted to hold a batch of the product to be kept cold, said container (24) being itself provided with an evaporator (28) included in a cooling coil for cooling said product batch to the desired low temperature at which the product is kept cold in the tank (10). A transferring equipment (36) is adapted automatically to transfer the contents from the container (24) to the tank (10) when said temperature has been attained.

FIG. 1

EP 0 122 900 A2

Croydon Printing Company Ltd.

APPARATUS FOR REFRIGERATION AND STORAGE OF PRODUCTS

The present invention relates to an apparatus for refrigeration and storage of products, especially liquid food products, including an insulated tank in which a cooling coil is disposed for circulation of a refrigerant to cool the tank contents, said food product being supplied batchwise to the tank, i.e. in a certain amount, at several times during a predetermined period and the tank is thus dimensioned for simultaneous storage of several such amounts of product.

A field of application of such apparatuses for refrigeration and storage of food products is the storage of milk in so-called farm tanks. Such farm tanks consists of insulated cooling tanks which are provided with conventional cooling coils adjoined to a refrigerating machine and in which the milk delivered in the tank is cooled, say from $+35^{\circ}C$ to the desired low temperature, say $+4^{\circ}C$. The milk is cooled directly upon milking down to said low temperature and is then stored in the tank at this low temperature until collection takes place. The tank is intended to receive milk from several milking operations and it thus operates with refrigeration in two, four or more refrigeration cycles for the total product amount. However, this process involves certain disadvantages. The product amount refilled each time mixes with said low temperature amount already contained in the tank, which amount due to mixing with the newly supplied product amount will have increased temperature so that the entire contents in the tank will be given an increased mixing temperature and will have to be cooled again, which results in high energy consumption. The cooling operation takes a relatively long time, usually about 3 hours, during which the tank contents are not available for collection and further transport. As refilling of new product amount usually takes place

PR/BP

twice every 24 hours no collection can be effected during a third of a 24-hour period, which entails problems concerning planning and carrying out of the collection transports. The cooling is usually effected by direct evaporation of refrigerant in said cooling coil but to reduce the above-mentioned disadvantages use is also made of pre-cooling with the aid of e.g. ice-water coolers at farms where cold water is accessible or it is possible otherwise to produce such water, e.g. in a so-called ice-bank. This measure, however, is not sufficient to solve the problems and disadvantages described above.

The present invention uses other means to solve the problems and the principal object of the invention is to provide an apparatus for refrigeration and storage of especially liquid food products, as has been described above, while eliminating the above-mentioned disadvantages.

Another object is to provide an apparatus in which the refrigeration takes place at a maximum average temperature of the product and refrigerant, which results in a minimum of energy consumption.

Still another object of the invention is to provide an apparatus in which one refrigerant is sufficient to obtain lower energy consumption and higher product quality and longer storage possibilities.

A further object is to provide an apparatus in which the stored product is available for collection and further transport during all the hours of a 24 hour-period independently of whether or not a new product amount is being cooled.

These and other objects are achieved in that the apparatus according to the invention has been given the characteristic features defined in the appended claims.

The invention will be described in more detail below with reference to the drawing, in which:

Fig. 1 shows a longitudinal section through an apparatus according to the invention; and

Fig. 2 is a section on line II-II in Fig. 1.

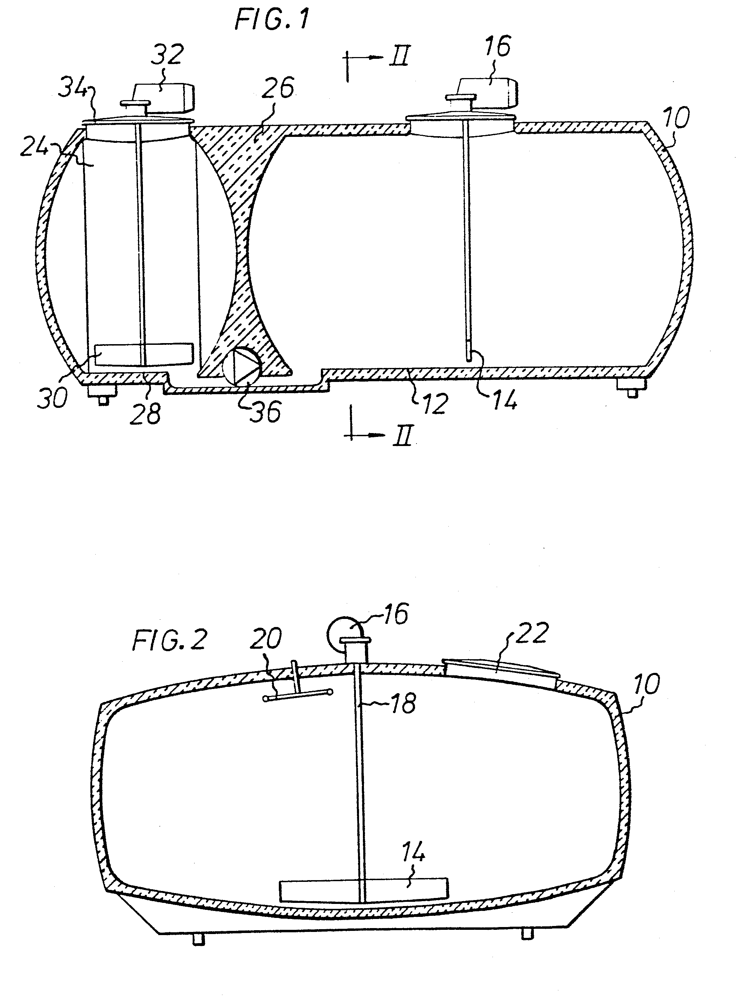

The farm tank illustrated in Figs. 1 and 2 include an insulated storage tank 10 dimensioned to receive a desired volume of the product to be stored. In farm tanks for storage of milk this volume may be the total collected volume from milking operations during several 24-hour periods. For refrigeration of the product stored in the tank there is provided in the bottom of the tank an evaporator 12 which is included as part of a conventional cooling coil including, in addition to the evaporator 12, a refrigerant container, expansion valve, compressor and condenser (not shown). The tank 10 is also provided with an agitator 14 driven by a motor 16 via a shaft 18 and a washing apparatus 20 for cleaning of the tank. The tank is also provided with a door 22 allowing direct access to the interior of the tank.

In conventional farm tanks of the type shown the product amount normally resulting from each milking operation is supplied to the tank 10 and is cooled from a temperature of about +35°C to a desired low temperature below +4°C by means cf the evaporator 12 in the tank bottom. Every time a fresh product amount is supplied, normally twice per 24 hours, it is mixed with the amount already contained in the tank 10, resulting in a mixing temperature making the subsequent refrigeration down to said low temperature uneconomical, with high energy consumption and restricted storing period. The stored volume cannot either be taken out during the refrigeration process, and thus the tank is blocked during this operation which usually takes about 3 hours.

According to the invention a cooling tank 24, which in the present embodiment is an integrated unit, is instead connected to the storage tank 10. This cooling tank 24, which is insulated and separate from the storage tank 10 by an insulated partition 26, is dimensioned to receive the product amount normally to be

4

cooled after each milking operation/refilling. For this purpose the cooling tank 24 is itself p.ovided with an evaporator 28 disposed in the bottom of the cooling tank 24, and an agitator 30 driven by a motor 32. The cooling tank 24 also has a door 34 providing access to the interior of the tank. For transferring the product amount from the cooling tank 24 to the storage tank 10 there is arranged a transferring equipment 36, schematically illustrated in the form of a valve, which is adapted automatically to transfer the product amount contained in the cooling tank 24 to the storage tank 10 when this product amount has been cooled to the desired low temperature.

The illustrated integrated unit is thus dimensioned to cool by means of a refrigerant a certain product amount in the separate cooling tank to the desired temperature and thereupon to transfer by automatic means the product amount to the storage tank 10 with a cold-keeping capacity within the indicated low temperature to which the product has been cooled, e.g. +4$^{o}$C. The cooling according to the invention is effected at a maximum average temperature of the product and refrigerant, which involves a minimum of energy consumption. With only one refrigerant there is thus obtained lower energy consumption and higher product quality. The storing posibilities are also prolonged in that the contents in the storage tank will never be heated by mixing with a freshly supplied warmer product amount but only with a product which is cooled to the low temperature at which the storage takes place.

It is evident that the illustrated embodiment is only an example of the invention and that it may be modified within the scope thereof. Thus, the cooling tank 24 may of course be quite separate from the storage tank 10 even if the integrated buildup shown involves several advantages. The cooling systems for the cooling tank 24 and the storage tank 10 may, as desired, be common or separate.

5

CLAIMS

1. Apparatus for refrigeration and storage of especially liquid food products, including an insulated tank in which a cooling coil is disposed for circulation of a refrigerant to cool the tank contents, said food product being supplied batchwise to the tank, i.e. in a certain amount, at several times during a predetermined period, and the tank is thus dimensioned for simultaneous storage of several such batches or amounts of product, c h a r a c t e r i z e d in that there is connected to the tank an insulated container (24) adapted to receive the supplied product amount, which container is dimensioned to substantially hold only said product amount and is provided with a separate cooling coil (28) adapted to cool said product amount to the desired low temperature, and a transferring equipment for transferring the cooled product amount to the tank (10).

2. Apparatus as claimed in claim 1, c h a r a c t e r i z e d in that the tank (10) and the container (24) are built up as an integrated unit with insulation (26) between tank and container.

3. Apparatus as claimed in claim 1 or 2, c h a r a c t e r i z e d in that the tank (10) and the container (24) are provided with agitator units (14, 30) for agitation of the contents.

4. Apparatus as claimed in any of claims 1 - 3, c h a r a c t e r i z e d in that the transferring equipment (36) is adapted automatically to transfer the product amount contained in the container (24) to the tank (10) when this product amount has been cooled to the desired low temperature.

5. Apparatus as claimed in any of claims 1 - 4, c h a r a c t e r i z e d in that the cooling coil of the tank (10) is adapted to keep cold a volume corre- spondning to the entire tank volume at the desired low temperature.

6. Apparatus as claimed in any of claims 1 - 5, c h a r a c t e r i z e d   in that the same refrigerant circulates in the cooling coil (12) of the tank (10) and the cooling coil (28) of the container (24).

FIG.1

FIG.2